# EUROPÄISCHE PATENTSCHRIFT

(11) **EP 2 950 977 B1**
(45) Veröffentlichungstag und Bekanntmachung des Hinweises auf die Patenterteilung: **07.04.2021**
(21) Anmeldenummer: 14702824.5
(22) Anmeldetag: 03.02.2014
(51) Int. Cl.: B24B 41/02, B23Q 1/58, F16C 29/02

(54) **WERKZEUGMASCHINE MIT EINER FÜHRUNGSEINRICHTUNG SOWIE VERFAHREN ZUR HERSTELLUNG EINER FÜHRUNGSEINRICHTUNG**
MACHINE TOOL HAVING A GUIDE DEVICE AND METHOD FOR PRODUCING A GUIDE DEVICE
MACHINE-OUTIL ÉQUIPÉE D'UN DISPOSITIF DE GUIDAGE ET PROCÉDÉ DE FABRICATION D'UN DISPOSITIF DE GUIDAGE

(30) Priorität: 04.02.2013 DE 102013101090
(43) Veröffentlichungstag der Anmeldung: 09.12.2015
(73) Patentinhaber: Fritz Studer AG, 3612 Steffisburg (CH)
(72) Erfinder: SENN, Andreas, CH-3257 Ammerzwil (CH); KLOTZ, Michael, CH-3612 Steffisburg (CH)
(74) Vertreter: Witte, Weller & Partner Patentanwälte mbB
(86) Internationale Anmeldenummer: PCT/EP2014/052030
(87) Internationale Veröffentlichungsnummer: WO 2014/118366

(56) Entgegenhaltungen:
- EP-A1- 0 536 494
- EP-A1- 2 478 995
- WO-A1-98/14710
- WO-A2-2004/063533
- DE-A1-102010 053 326
- US-B2- 7 077 573

## Beschreibung

Die Erfindung betrifft eine Werkzeugmaschine, insbesondere eine Schleifmaschine, mit einer Führungseinrichtung mit zumindest einer sich im Wesentlichen linear erstreckenden ersten Gleitfläche, die mit zumindest einer sich im Wesentlichen linear erstreckenden zweiten Gleitfläche koppelbar ist, um eine Relativbewegung, insbesondere eine lineare Relativbewegung, zwischen der ersten Gleitfläche und der zweiten Gleitfläche zu erlauben. Ferner betrifft die Erfindung auch ein Verfahren zur Herstellung einer Führungseinrichtung für eine Schleifmaschine.

Aus der DE 10 2010 053 326 A1 ist ein Gleitlager in Form eines Drehlagers bekannt, das ein Lagergrundbauteil aufweist, welches mit einem Zusatzwerkstoff beschichtet ist, der eine spanend bearbeitete und danach mittels Laserstrahlung bearbeitete und/oder geätzte Oberfläche aufweist, wobei im Zusatzwerkstoff im Bereich der Oberfläche umgrenzte Vertiefungen ausgebildet sind. Aus der US 7,077,573 B2 ist ein Drehlager mit einer strukturierten Oberfläche bekannt. Die EP 2 478 995 A1, welche den Oberbegriff des Vorrichtungsanspruchs 1 bildet, oeschreibt eine Linearführung für eine Schleifmaschine.

Aus der WO 98/14710 A1 ist ein Schiebekopf für ein Festplattenlaufwerk mit Gleitlagerung bekannt, wobei der Schiebekopf und die Festplatte durch einen dünnen Luftfilm getrennt sind, wobei der Schiebekopf zwei parallele Schienen aufweist, die sich entlang der Schieberichtung erstrecken, und wobei die Schienen laserstrukturiert sind. Aus der WO 2004/063533 A2 ist ein als Gleitlager gestaltetes Drehlager in Form eines Axiallagers mit ebenen Flächen bekannt, die eine laserstrukturierte Oberfläche aufweisen.

Werkzeugmaschinen, etwa Schleifmaschinen, insbesondere Rundschleifmaschinen, sind im Stand der Technik hinreichend bekannt. Werkzeugmaschinen können ferner etwa als Bohrmaschinen, Fräsmaschinen, Drehmaschinen oder in ähnlicher Weise ausgeführt sein. Beispielhaft können etwa Rundschleifmaschinen rotationssymmetrische Werkzeuge, etwa Schleifscheiben, aufweisen. Diese können in geeigneter Weise mit einem Werkstück zur Materialabtragung zusammenwirken. Rundschleifmaschinen können beispielsweise zum Außenrundschleifen, Innenrundschleifen, ferner zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Werkstücken können etwa auch exzentrisch ausgebildete Werkstückflächen bearbeitet werden, wenn eine Werkstückaufnahme und eine Werkzeugeinheit (etwa ein Spindelkopf) in geeigneter Weise antreibbar und relativ zueinander verfahrbar sind. Auf diese Weise können mit Rundschleifmaschinen etwa Nockenwellen, Kurbelwellen und ähnliche Werkstücke mit exzentrischen Geometrien bearbeitet bzw. geschliffen werden. Ferner sind Werkzeugmaschinen bekannt, die eine kombinierte Bearbeitung von Werkstücken erlauben, etwa kombinierte Schleif- und Drehmaschinen.

Führungseinrichtungen können insbesondere dazu vorgesehen sein, Linearbewegungen von Komponenten der Werkzeugmaschine zu ermöglichen. Ferner sind Führungseinrichtungen (auch: Führungen) etwa auch dazu vorgesehen, mit der Bearbeitung des Werkstücks einhergehende Lasten und Kräfte aufzunehmen. Es kann sich dabei etwa um Bearbeitungskräfte, Gewichtskräfte und/oder um Beschleunigungskräfte handeln. Die Gestaltung und Ausführung der Führungseinrichtungen hat wesentlichen Einfluss auf eine mit der Werkzeugmaschine bei der Bearbeitung erzielbare Genauigkeit. Führungseinrichtungen sollten insbesondere eine hohe statische Steifigkeit sowie eine hohe dynamische Steifigkeit aufweisen. Führungseinrichtungen sollten ferner dazu ausgebildet sein, bei einer Vielzahl denkbarer Betriebszustände der Werkzeugmaschine thermisch hinreichend stabil zu sein, um etwa einen sog. thermischen Gang der Werkzeugmaschine zu minimieren.

Eine weitere Verkürzung von Zykluszeiten ist ein wesentliches Ziel in der Produktionstechnik. Ein Beitrag hierzu kann etwa geleistet werden, indem Werkzeugmaschinen dazu ausgebildet sind, Verfahrbewegungen mit hohen Beschleunigungen und hohen Geschwindigkeiten auszuführen. Hierzu kann es einerseits erforderlich sein, Antriebseinrichtungen der Werkzeugmaschine leistungsfähiger zu gestalten, um höhere Beschleunigungskräfte aufbringen zu können. Üblicherweise geht jedoch eine derartige Leistungssteigerung zugleich mit einer Erhöhung des Gewichts und somit der Trägheit einher. Dies kann grundsätzlich zu einer höheren Belastung der Führungseinrichtungen führen und wäre wiederum bei deren Auslegung und Gestaltung zu berücksichtigen.

Der Erfindung liegt daher die Aufgabe zugrunde, eine Werkzeugmaschine, insbesondere eine Schleifmaschine, mit einer Führungseinrichtung anzugeben, welche insgesamt in alternativer Weise zur Erhöhung der Leistungsfähigkeit der Werkzeugmaschine beitragen können und sich insbesondere zur Verringerung von Zykluszeiten eignen sowie möglichst bei der Führungseinrichtung auftretende Belastungen verringern können. Ferner soll ein korrespondierendes Verfahren zur Herstellung einer Führungseinrichtung für eine Werkzeugmaschine angegeben werden.

Diese Aufgabe wird erfindungsgemäß durch eine Werkzeugmaschine, insbesondere Schleifmaschine, mit zumindest einer als Gleitführung gestalteten Führungseinrichtung, wobei die Führungseinrichtung zumindest eine sich linear in einer Ebene erstreckende erste Gleitfläche und zumindest eine sich linear in einer Ebene erstreckende zweite Gleitfläche aufweist, die miteinander gekoppelt sind, um eine lineare Relativbewegung zwischen der ersten Gleitfläche und der zweiten Gleitfläche zu erlauben, wobei zumindest die erste Gleitfläche oder die zweite Gleitfläche zumindest abschnittsweise mit einer laserstrukturierten Oberfläche versehen ist, die eine Mikrostrukturierung zur Reibungsoptimierung aufweist, wobei die Mikrostrukturierung als Muster mit einer Vielzahl rinnenförmiger Vertiefungen ausgebildet ist, wobei zumindest einige der rinnenförmigen Vertiefungen in einer ersten Vorzugsrichtung und zumindest einige der rinnenförmigen Vertiefungen in einer zweiten Vorzugsrichtung entlang der Oberfläche ausgerichtet sind, und wobei die erste Vorzugsrichtung und die zweite Vorzugsrichtung einen Winkel einschließen und insbesondere zueinander senkrecht sind, und wobei die zumindest eine zweite Gleitfläche einem Schlitten zugeordnet ist, der relativ zur zumindest einen ersten Gleitfläche verfahrbar ist, wobei die zumindest eine zweite Gleitfläche zumindest abschnittsweise mit der laserstrukturierten Oberfläche versehen ist, die die Mikrostrukturierung aufweist.

Die Aufgabe der Erfindung wird auf diese Weise vollständig gelöst.

Erfindungsgemäß kann nämlich mit der Mikrostrukturierung an zumindest einer der Gleitflächen eine tribologisch hochwirksame Fläche zur Reduzierung des Reibwiderstands bei der Relativbewegung geschaffen werden, die Reibverluste beim Betrieb der Führungseinrichtung reduzieren und insgesamt eine verbesserte Dynamik der Werkzeugmaschine bewirken kann. Ferner können gleichartige Führungseigenschaften über die Maschinenlebensdauer ermöglicht werden, insbesondere kann die Führungscharakteristik über die Maschinenlebensdauer im Wesentlichen konstant sein. Auf diese Weise können insbesondere Linearbewegungen, etwa Zustellbewegungen, Vorschubbewegungen, Rüstbewegungen oder Ähnliches, mit geringerem Aufwand und in kürzerer Zeit bei höheren Geschwindigkeiten durchgeführt werden. Die Mikrostrukturierung kann insbesondere Mikrokonturen aufweisen, die als Mikroreservoire für ein Gleitmittel oder Gleitfluid dienen können. Bei dem Gleitfluid kann es sich insbesondere um ein Schmiermittel, etwa ein Schmieröl oder eine Schmieremulsion, handeln.

Im Gegensatz zu sog. Makrostrukturen, die etwa mittels im Stand der Technik bekannter Verfahren an den Gleitflächen erzeugt werden können, sind die mittels einer Mikrobearbeitung erzeugbaren Mikrostrukturen deutlich filigraner ausgeführt. Die Makrostrukturierung kann etwa mittels Schaben oder ähnlichen makroskopisch wirksamen Verfahren bewirkt werden. Vereinfacht gesagt kann etwa die Mikrostrukturierung Strukturelemente aufweisen, deren Abmessungen zumindest um den Faktor 10 kleiner als die Abmessungen von Strukturelementen sein können, die mittels makroskopischer Verfahren zur Oberflächenstrukturierung erzeugbar sind. Mit anderen Worten kann die Mikrostrukturierung etwa Strukturelemente aufweisen, deren Abmessungen im Mikrometerbereich liegen, also etwa kleiner als 0,1 mm (Millimeter) sein können.

Grundsätzlich kann die Mikrostrukturierung zur Lebensdauererhöhung und Verschleißminimierung bei den Gleitflächen der Führungseinrichtung beitragen. Ferner kann die Lebensdauerabhängigkeit der Reibkoeffizienten der Gleitpaarung der Führungseinrichtung deutlich verringert werden. Mit anderen Worten können sich die Reibkoeffizienten im Lebensdauerablauf in deutlich geringerem Maße verändern, als dies bei Gleitpaarungen auftreten würde, die keine Mikrostrukturierung aufweisen. Die Vorteile treten insbesondere bei Mikrostrukturierungen auf, die mittels Laserstrahlung erzeugt sind.

Allgemein kann die Mikrostrukturierung grundsätzlich mittels geeigneter Fertigungsverfahren und/oder Bearbeitungsverfahren erzeugt werden. Hierzu können neben der Laserbearbeitung etwa das Erodieren, Rollen, Prägen, Ätzen und weitere Verfahren genutzt werden. Auch spanabhebende Verfahren zur Mikrobearbeitung sind grundsätzlich vorstellbar. So sind etwa auch Verfahren zur mechanischen Mikrobearbeitung nutzbar.

Die Führungseinrichtung kann insbesondere als Gleitführung ausgestaltet sein. Die Gleitführung kann etwa als hydrodynamische Gleitführung ausgebildet sein. Insbesondere bei hydrodynamischen Gleitführungen kann die Mikrostrukturierung zur Verbesserung der tribologischen Verhältnisse beitragen. So kann die Mikrostrukturierung insbesondere beim Anlauf aus dem Stillstand sowie bei geringen Relativgeschwindigkeiten zu einer Verringerung der aktuellen Reibungskoeffizienten beitragen. Die mittels der Mikrostrukturierung in zumindest eine der Gleitflächen eingebrachten Strukturelemente können ferner als Reservoir für ein Schmiermittel dienen, um etwa im Falle einer Mangelschmierung oder einer Überlastung der Führungseinrichtung noch eine hinreichende Schmierung und Bewegungsfähigkeit gewährleisten zu können. Ferner kann die sog. Stick-slip-Neigung (auch: Ruckgleiten) durch Optimierung der tribologischen Verhältnisse wirksam reduziert werden.

Die Mikrostrukturierung kann insbesondere mittels einer sog. Laserstrukturierung erzeugt werden. Mittels der Laserstrukturierung lassen sich filigrane Strukturelemente in Bauteile verschiedenster Werkstoffe einbringen. Hierzu eignet sich insbesondere die Laserstrukturierung unter Verwendung gepulster Laserstrahlung. Auf diese Weise können bei geeigneter Ansteuerung auf kleinstem Raum eine Vielzahl von Strukturelementen erzeugt werden, etwa eine Vielzahl filigraner Ausnehmungen in der Oberfläche der zumindest einen ersten Gleitfläche und/oder der zumindest einen zweiten Gleitfläche.

Ferner kann die Mikrostrukturierung vorteilhaft auch bei Führungseinrichtungen zur Verwendung kommen, die als hydrostatische Gleitführungen oder als aerostatische Gleitführungen ausgebildet sind. Auch bei derartigen Gleitführungen kann sich durch die mittels Laserstrahlung erzeugte Mikrostrukturierung eine Verringerung des Reibwiderstands und somit eine erhöhte Dynamik ergeben.

Bei der zumindest einen ersten Gleitfläche und bei der zumindest einen zweiten Gleitfläche kann es sich insbesondere um plane Gleitflächen handeln, die sich im Wesentlichen nur in einer Ebene erstrecken. Es ist jedoch auch vorstellbar, dass es sich bei den Gleitflächen um gekrümmte, aber aneinander angepasste Gleitflächen handelt. Die Gleitflächen der Gleitpaarung der Führungseinrichtung können verschiedene Werkstoffpaarungen aufweisen, die hinreichend gleitfähig sind und insbesondere relativ niedrige Reibungskoeffizienten bereitstellen. Es sind beispielhaft Paarungen gleicher Werkstoffe denkbar. Es ist jedoch auch vorstellbar, verschiedene Werkstoffe zur Erhöhung der Gleitfähigkeit bzw. zur Verringerung der Reibungskoeffizienten zu kombinieren. Bei den Werkstoffen für die Gleitflächen kann es sich etwa um Gusseisen, insbesondere Grauguss, Stahl, etwa um gehärteten Stahl, abformbare Kunststoffe auf Kunstharzbasis, etwa Epoxidharz, sowie um Werkstoffe handeln, die Polytetrafluorethylen (PTFE) oder ähnliche reiboptimierte Kunststoffe aufweisen. Beispielhaft kann PTFE etwa mit Bronze kombiniert sein. Ferner können etwa auch metallbasierte Materialien, insbesondere metallbasierte Schichtwerkstoffe genutzt werden, die mittels Hochgeschwindigkeits-Flammspritzen (auch bezeichnet als: High-Velocity-Oxygen-Fuel oder HVOF) behandelt bzw. beschichtet sind. Andere geeignete Werkstoffe sind ohne weiteres denkbar, etwa Keramik oder Werkstoffe mit keramischen Anteilen. Die Gleitflächen können als integrale Bestandteile der Führungseinrichtung ausgebildet sein. Die Gleitflächen können jedoch etwa auch als sog. Gleitbeläge ausgeführt sein, die mit einer Grundfläche koppelbar sind.

Es ist von besonderem Vorteil, dass laserstrukturierte Oberflächen in einer Vielzahl verschiedener Werkstoffe erzeugt werden können. Herkömmliche (makroskopische) Verfahren zur Strukturierung von Gleitflächen sind hingegen häufig auf spezifische Werkstoffe beschränkt. Mittels der Laserstrukturierung können filigrane Strukturelemente in Metalle, Kunststoffe sowie in weitere denkbare Werkstoffe und Werkstoffkombinationen eingebracht werden.

Es ist ferner anzumerken, dass die zumindest eine mit der Mikrostrukturierung versehene Gleitfläche ferner weiterhin durchaus auch mit Makrostrukturen versehen sein kann. Dabei kann es sich etwa um mittels makroskopisch wirksamer Verfahren eingebrachte Kanäle für das Gleitfluid oder Schmierfluid handeln.

In vorteilhafter Ausgestaltung weist die Mikrostrukturierung der laser-strukturierten Oberfläche eine Strukturdichte von mindestens 10 Strukturelementen pro Millimeter, vorzugsweise von mindestens 50 Strukturelementen pro Millimeter, weiter bevorzugt von mindestens 100 Strukturelementen pro Millimeter auf. Es kann sich dabei insbesondere um eine lineare Strukturdichte handeln, die das Auftreten von Strukturelementen in lediglich einer Richtung berücksichtigt. Bei den Strukturelementen kann es sich um wiederkehrende Elemente handeln, etwa um in die Oberfläche der Gleitfläche eingebrachte Vertiefungen, oder um mit diesen korrespondierende Erhebungen. Anders gesagt kann ein Strukturelement etwa durch ein "Tal" oder einen "Berg" gebildet sein, welche in der Oberfläche der Gleitfläche ausgebildet sind. Die Strukturdichte kann grundsätzlich in Quer- und Längsrichtung der Gleitfläche variieren.

In vorteilhafter Weiterbildung weist die Mikrostrukturierung der laserstrukturierten Oberfläche eine Strukturdichte von mindestens 100 Strukturelementen pro Quadratmillimeter, vorzugsweise von mindestens 2500 Strukturelementen pro Quadratmillimeter, weiter bevorzugt von mindestens 10.000 Strukturelementen pro Quadratmillimeter auf. Demgemäß kann die Strukturdichte etwa auch das flächige Vorhandensein von Strukturelementen auf der laserstrukturierten Oberfläche betreffen. Es kann dabei insbesondere eine zweidimensionale Struktur, etwa ein zweidimensionales Muster von Strukturelementen, erfasst und berücksichtigt werden.

Gemäß einer weiteren Ausgestaltung weist die Mikrostrukturierung eine Vielzahl vertiefter Strukturelemente auf, deren Bearbeitungsfläche ein Anteil von maximal etwa 50 %, vorzugsweise von maximal etwa 30 %, weiter bevorzugt von maximal etwa 15 %, an der Grundfläche der laserstrukturierten Oberfläche umfasst. Allgemein kann die Form der Mikrostrukturierung in Längs- und Querrichtung der Gleitfläche variieren.

Unter dem Begriff Bearbeitungsfläche kann etwa diejenige Fläche aufgefasst werden, bei der im Rahmen der Laserstrukturierung ein Materialabtrag erfolgt ist. Die verbleibende Fläche kann etwa auch nach der Laserstrukturierung im Wesentlichen die Kontur der Gleitfläche aufweisen, die vor der Laserstrukturierung vorhanden war. Auch mit einer relativ geringen Bearbeitungsfläche können in der Gleitfläche eine Vielzahl von Mikroausnehmungen erzeugt werden, die als Mikroreservoire für ein Schmierfluid oder Gleitfluid dienen können, so dass sich insgesamt die Reibpaarung zwischen der ersten Gleitfläche und der zweiten Gleitfläche verbessern kann.

Gemäß einer weiteren Ausgestaltung ist die Mikrostrukturierung als Muster mit einer Vielzahl voneinander beabstandeter Ausnehmungen ausgebildet, die insbesondere als im Wesentlichen zylindrische oder kegelige Vertiefungen ausgebildet sein können. Die Ausnehmungen können den Strukturelementen entsprechen. Die Ausnehmungen können mittels gepulster Laserstrahlung definiert und strukturiert erzeugt werden. Es versteht sich, dass die Ausnehmungen nicht als im makroskopischen Sinne ideale Zylinder oder Kegel in die Gleitfläche eingebracht werden müssen. Vielmehr können sich bei der Laserstrukturierung (mikroskopische) Ungenauigkeiten ergeben, die jedoch gleichwohl der Verwendung der Begriffe "im Wesentlichen zylindrisch" oder "im Wesentlichen kegelig" nicht entgegenstehen sollen.

Gemäß einer weiteren Ausgestaltung ist die Mikrostrukturierung als Muster mit einer Vielzahl von einander beabstandeten Ausnehmungen ausgebildet, die als Nuten gestaltet sind, insbesondere als sich in Richtung auf einen Nutgrund verjüngende Nuten. Die Nuten können insbesondere eine Vorzugsorientierung aufweisen. Die Nuten können (in Richtung ihrer Längserstreckung betrachtet) etwa einen V-förmigen oder einen U-förmigen Querschnitt aufweisen. Auch hier versteht es sich, dass die Nuten nicht unbedingt als (im makroskopischen Sinne) ideale Nuten in der Gleitfläche ausgeformt sein müssen. Vielmehr können sich Übergänge, Ausfransungen, mikroskopische Strukturdefekte und ähnliche Gestaltungen ergeben, die jedoch der Verwendung des Begriffs "Nut" nicht entgegenstehen sollen. Beispielhaft können die Nuten in parallelen Reihen angeordnet sein. Die Reihen können zueinander ausgerichtet oder voneinander versetzt angeordnet sein.

Gemäß einer weiteren Ausgestaltung ist die Mikrostrukturierung als Muster mit einer Vielzahl voneinander beabstandeter rinnenförmigen Vertiefungen ausgebildet, die insbesondere einen im Wesentlichen geradlinigen Verlauf aufweisen. Auf diese Weise kann sich etwa eine Abfolge von Bergen und Tälern ergeben, die jedoch sanft ineinander übergehen können. Das heißt mit anderen Worten, die rinnenförmigen Vertiefungen können mit der sie umgebenden Oberfläche sanft verrundet sein. Die rinnenförmigen Vertiefungen können im Wesentlichen parallel zueinander angeordnet sein.

Erfindungsgemäß ist die Mikrostrukturierung als Muster mit einer Vielzahl rinnenförmiger Vertiefungen ausgebildet, wobei zumindest einige der rinnenförmigen Vertiefungen in einer ersten Vorzugsrichtung und zumindest einige der rinnenförmigen Vertiefungen in einer zweiten Vorzugsrichtung entlang der Oberfläche ausgerichtet sind, und wobei die erste Vorzugsrichtung und die zweite Vorzugsrichtung einen Winkel einschließen und insbesondere zueinander senkrecht sind.

Mit anderen Worten können zwei Anordnungen zueinander im Wesentlichen paralleler rinnenförmiger Vertiefungen kombiniert werden, um insgesamt eine Struktur gekreuzter Rinnen erzeugen zu können. Auch bei den Rinnen kann es sich um Strukturelemente handeln, deren lineare Strukturdichte oder flächige Strukturdichte den vorstehenden Konventionen entsprechen kann.

Die insbesondere als Vertiefungen ausgestalteten Strukturelemente können in der strukturierten Oberfläche der Gleitfläche Eindringtiefen aufweisen, die kleiner als etwa 100 µm (Mikrometer), vorzugsweise kleiner als etwa 50 µm, weiter bevorzugt kleiner als etwa 20 µm, noch weiter bevorzugt kleiner als etwa 10 µm beträgt. Es ist auch vorstellbar, für die Strukturelemente eine Eindringtiefe vorzusehen, die weniger als 5 µm beträgt. Es wurde erkannt, dass auch derart kleine Strukturen, die nur ein äußerst geringes abgetragenes Volumen aufweisen, in hinreichender Menge zur Aufnahme von Gleitfluid ausgebildet sind und zur Optimierung der tribologischen Verhältnisse bei der Führungseinrichtung beitragen können.

Gemäß einer weiteren Ausgestaltung ist die zumindest eine erste Gleitfläche gestellseitig an der Werkzeugmaschine aufgenommen und zumindest abschnittsweise mit der laserstrukturierten Oberfläche versehen, die die Mikrostrukturierung aufweist.

So kann die zumindest eine erste Gleitfläche etwa unmittelbar am Gestell oder Maschinentisch der Werkzeugmaschine festgelegt sein. Es ist jedoch auch vorstellbar, die zumindest eine erste Gleitfläche mittelbar mit dem Gestell oder Maschinentisch der Werkzeugmaschine zu koppeln. Dies kann etwa dann der Fall sein, wenn die zumindest eine erste Gleitfläche gestellseitig an einem (beweglichen) Kreuztisch vorgesehen ist. Mit anderen Worten kann die zumindest eine erste Gleitfläche etwa verschieblich zwischen dem Gestell oder Maschinentisch der Werkzeugmaschine und der zumindest einen zweiten Gleitfläche angeordnet sein, die ihrerseits relativ zur zumindest einen ersten Gleitfläche beweglich ist.

Erfindungsgemäß ist die zumindest eine zweite Gleitfläche einem Schlitten zugeordnet, der relativ zur zumindest einen ersten Gleitfläche verfahrbar ist, wobei die zumindest eine zweite Gleitfläche zumindest abschnittsweise mit der laserstrukturierten Oberfläche versehen ist, die die Mikrostrukturierung aufweist.

Wie vorstehend bereits erwähnt, kann es grundsätzlich ausreichend sein, lediglich eine der zumindest einen Gleitfläche und der zumindest einen zweiten Gleitfläche mit der Mikrostrukturierung zu versehen. Bereits dann, wenn lediglich einer der Gleitpartner oder Reibpartner mit der Mikrostrukturierung versehen ist, kann der einer Relativbewegung entgegenstehende Reibwiderstand signifikant reduziert werden.

Gemäß einer weiteren Ausgestaltung sind die zumindest eine erste Gleitfläche und die zumindest eine zweite Gleitfläche mit der laserstrukturierten Oberfläche versehen, die die Mikrostrukturierung aufweist. Es kann jedoch auch von Vorteil sein, beide Reibpartner mit einer entsprechenden Mikrostrukturierung zu versehen. Somit können die Mikrostrukturen beider Reibpartner als Ölreservoir dienen.

Ein weiterer Aspekt der Offenbarung betrifft eine Führungseinrichtung für eine Werkzeugmaschine, insbesondere eine Schleifmaschine, hergestellt durch Bereitstellen zumindest einer sich im Wesentlichen linear in einer Ebene erstreckenden ersten Gleitfläche, die mit zumindest einer sich im Wesentlichen linear in einer Ebene erstreckenden zweiten Gleitfläche koppelbar ist, um eine lineare Relativbewegung zwischen der ersten Gleitfläche und der zweiten Gleitfläche zu erlauben, und Erzeugen einer zumindest abschnittsweise strukturierten Oberfläche auf zumindest der ersten Gleitfläche oder der zweiten Gleitfläche mit einer kurzgepulsten, insbesondere ultrakurzgepulsten Lasereinrichtung, umfassend Erzeugung einer Mikrostrukturierung zur Reibungsoptimierung.

Wie vorstehend bereits erwähnt, lässt sich die vorteilhafte Mikrostrukturierung der strukturierten Oberfläche der zumindest einen Gleitfläche insbesondere durch Laserstrukturierung mittels kurzgepulster oder ultrakurzgepulster Laser erzeugen. Auf diese Weise können Strukturen im Mikrometerbereich erzeugt werden, die sich hinreichend von bekannten Oberflächenstrukturen auf Gleitflächen von Führungseinrichtungen für Werkzeugmaschinen unterscheiden, die etwa mittels makroskopisch wirksamer Herstellverfahren erzeugt wurden, beispielsweise mittels Schaben. Die Mikrostrukturierung hat besondere Vorteile im Hinblick auf das tribologische Verhalten der Führungseinrichtung, insbesondere beim Anlauf und bei niedrigen Relativgeschwindigkeiten.

Das Verfahren betreffend wird die Aufgabe der Erfindung durch ein Verfahren zur Herstellung einer Führungseinrichtung für eine Werkzeugmaschine, insbesondere eine Schleifmaschine, gelöst, umfassend die folgenden Schritte:
- Bereitstellen zumindest einer sich im Wesentlichen linear in einer Ebene erstreckenden ersten Gleitfläche und zumindest einer sich im Wesentlichen linear in einer Ebene erstreckenden zweiten Gleitfläche, die mit der zumindest einen ersten Gleitfläche gekoppelt ist, um eine lineare Relativbewegung zwischen der ersten Gleitfläche und der zweiten Gleitfläche zu erlauben; und
- Erzeugen einer zumindest abschnittsweise strukturierten Oberfläche auf zumindest der ersten Gleitfläche oder der zweiten Gleitfläche mit einer Bearbeitungseinrichtung, insbesondere einer Lasereinrichtung, umfassend Erzeugung einer Mikrostrukturierung zur Reibungsoptimierung, wobei die Mikrostrukturierung als Muster mit einer Vielzahl rinnenförmiger Vertiefungen ausgebildet wird, wobei zumindest einige der rinnenförmigen Vertiefungen in einer ersten Vorzugsrichtung und zumindest einige der rinnenförmigen Vertiefungen in einer zweiten Vorzugs-richtung entlang der Oberfläche ausgerichtet werden, und wobei die erste Vorzugsrichtung und die zweite Vorzugsrichtung einen Winkel einschließen und insbesondere senkrecht zueinander sind, und
wobei die zumindest eine zweite Gleitfläche einem Schlitten zugeordnet ist, der relativ zur zumindest einen ersten Gleitfläche verfahrbar ist, und wobei die zumindest eine zweite Gleitfläche zumindest abschnittweise mit der laser-strukturierten Oberfläche versehen ist, die die Mikrostrukturierung aufweist.

Auch auf diese Weise wird die Aufgabe der Erfindung vollkommen gelöst.

Das Verfahren kann vorteilhaft dadurch weitergebildet sein, dass der Schritt des Erzeugens der zumindest abschnittsweise strukturierten Oberfläche Folgendes aufweist:
- Bestrahlung der zu strukturierenden Oberfläche mit kurzgepulster, vorzugsweise mit ultrakurzgepulster Laserstrahlung zur Erzeugung einer Vielzahl von vertieften Strukturelementen; und
- Erzeugung einer Relativbewegung zwischen der Lasereinrichtung zur Erzeugung von Laserstrahlung und der zu strukturierenden Oberfläche zur Erzeugung einer flächigen Mikrostrukturierung.

Bei sog. Kurzpulslasern sowie bei Ultrakurzpulslasern kann es sich um Lasereinrichtungen handeln, die dazu ausgestaltet sind, gepulstes Laserlicht mit definierten Pulsbreiten und Wiederholfrequenzen zu erzeugen. Beispielhaft kann etwa ein Kurzpulslaser dazu ausgestaltet sein, Laserimpulse mit einer Dauer im Bereich von etwa 1 ms (Millisekunde) bis hin zu einigen ns (Nanosekunden) zu erzeugen. Ein sog. Ultrakurzpulslaser kann hingegen dazu ausgestaltet sein, Laserimpulse zu erzeugen, deren Pulsbreite (oder: Pulsdauer) etwa im Bereich von einigen ns (Nanosekunden) bis hin zu einigen fs (Femtosekunden) liegt. Je kürzer die Pulsbreiten, desto filigraner können grundsätzlich die mittels der Lasereinrichtung erzeugbaren Strukturelemente in der zu strukturierenden Oberfläche der zumindest einen Gleitfläche gestaltet sein. Es versteht sich, dass ein einzelnes Strukturelement grundsätzlich auch durch Bestrahlung der Oberfläche mit einer Mehrzahl von Laserimpulsen erzeugbar sein kann. Eine Mehrzahl relativ schwacher Laserimpulse kann die Genauigkeit und Oberflächengüte des sich ergebenden Strukturelements verbessern. Im Gegensatz dazu kann etwa ein Strukturelement, das beispielhaft mittels eines einzigen (relativ starken) Laserimpulses erzeugt ist, größere Gestaltabweichungen aufweisen.

Es versteht sich, dass der Laserimpuls nicht unbedingt die Form eines (idealen) Rechtecksimpulses aufweisen muss. Vielmehr kann der Laserimpuls flache Flanken aufweisen und beispielhaft etwa durch trigonometrische Funktionen oder ähnliche periodische Funktionen definiert sein. Der Laserimpuls kann etwa auch durch eine Amplitude einer periodischen Funktion getriggert werden, die einer konstanten Funktion überlagert wird. Mit anderen Worten kann der Laserimpuls etwa ein Intensitätsmaximum aufweisen, das sich mit einem Intensitätsminimum abwechselt, das etwa durch einen konstanten Intensitätswert bestimmt ist. Weitere Modulationsverfahren zur Beeinflussung der Pulsbreite und ggf. einer Pulsfrequenz sind denkbar.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere offenbarungsgemäße Merkmale und Vorteile ergeben sich aus der nachfolgenden Beschreibung und Erläuterung mehrerer bevorzugter Ausführungsbeispiele unter Bezugnahme auf die Zeichnungen. Es zeigen:
- Fig. 1: eine perspektivische Ansicht einer als Schleifmaschine ausgebildeten Werkzeugmaschine mit einer Einhausung, die teilweise gebrochen dargestellt ist;
- Fig. 2a bis 2d: verschiedene vereinfachte Querschnitte durch Führungseinrichtungen, die sich hinsichtlich ihres geometrischen Aufbaus unterscheiden;
- Fig. 3: eine stark vereinfachte schematische Ansicht einer Lasereinrichtung, die dazu ausgebildet ist, die Oberfläche einer Führungsfläche oder Gleitfläche zu strukturieren;
- Fig. 4a und Fig. 4b: zwei Draufsichten auf Gleitflächen, denen (gedachte) Bearbeitungsbahnen überlagert sind, entlang derer etwa mittels eines gepulsten Lasers eine Mikrostrukturierung erfolgen kann;
- Fig. 5: eine diagrammatische Darstellung eines zeitlichen Intensitätsverlaufs einer Laserstrahlung zur Erzeugung einer Mikrostrukturierung;
- Fig. 6a bis 6d: verschiedene stark vereinfachte perspektivische Teilansichten von Gleitflächen, die strukturierte Oberflächen aufweisen, in die verschiedene beispielhafte Mikrostrukturierungen eingebracht sind; und
- Fig. 7: ein schematisches, vereinfachtes Flussdiagramm eines beispielhaften Verfahrens zur Herstellung einer Führungseinrichtung für eine Werkzeugmaschine, insbesondere für eine Schleifmaschine.

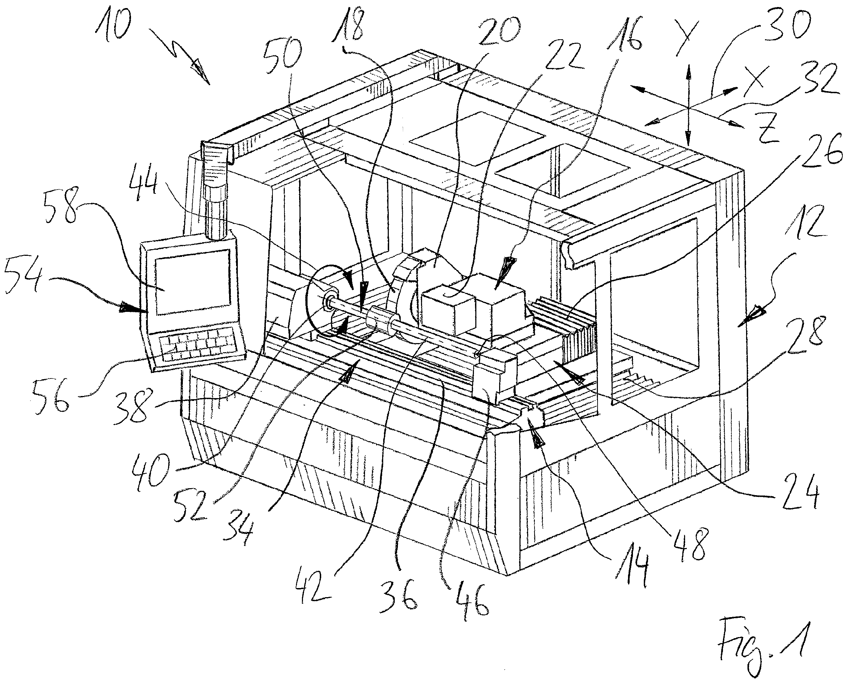

In Fig. 1 ist eine Werkzeugmaschine perspektivisch dargestellt und insgesamt mit 10 bezeichnet. Die Werkzeugmaschine 10 ist vorliegend als Schleifmaschine ausgebildet, insbesondere als Rundschleifmaschine, allgemein auch als Horizontalschleifmaschine. Es versteht sich, dass die Werkzeugmaschine 10 grundsätzlich auch als Vertikalschleifmaschine konfiguriert sein kann. Die Werkzeugmaschine 10 weist eine Einhausung 12 auf, die als Gehäuse fungiert. Die Einhausung 12 ist in Fig. 1 teilweise gebrochen dargestellt. Die Einhausung 12 kann einen Prozessraum definieren, der nach außen abgeschlossen oder abschließbar ist. Die Einhausung 12 erlaubt insbesondere bei automatisierten Bearbeitungsvorgängen eine sichere Abgrenzung des Prozessraums der Werkzeugmaschine 10 nach außen. Auf diese Weise kann eine grundsätzlich von beweglichen Komponenten ausgehende Gefahr minimiert werden. Ferner kann ein unerwünschter Austritt von Schmiermittel, Kühlflüssigkeit oder von Spänen oder sonstigem Abrieb in die Umgebung unterbunden werden. Die Einhausung 12 kann in geeigneter Weise mit Türen oder Klappen versehen sein, um den Prozessraum der Werkzeugmaschine 10 zugänglich zu machen. Es versteht sich, dass die Werkzeugmaschine 10 grundsätzlich auch ohne eine vollständig umhüllende Einhausung 12 gestaltet sein kann. So kann etwa eine lediglich abschnittsweise ausgebildete Einhausung 12 vorgesehen sein, beispielhaft eine zaunartige Einhausung 12.

Die Werkzeugmaschine 10 weist beispielhaft ein Maschinenbett 14 auf, das allgemein auch als Gestell oder Maschinentisch bezeichnet werden kann. Das Maschinenbett 14 kann eine präzise Lagerung und Führung von Komponenten der Werkzeugmaschine 10 unter Vermeidung von Deformationen oder Verformungen ermöglichen. Mit dem Maschinenbett 14 ist (zumindest mittelbar) ein Spindelkopf 16 gekoppelt, an dem ein Bearbeitungswerkzeug aufnehmbar ist. Die Kopplung des Spindelkopfes 16 mit dem Maschinenbett 14 kann unter Hinzunahme zumindest einer Führungseinrichtung erfolgen. Beispielhaft kann der Spindelkopf 16 auch als Schleifkopf bezeichnet werden. Vorliegend handelt es sich bei dem Werkzeug, das am Spindelkopf 16 aufnehmbar ist, um eine Schleifscheibe 18, die mit dem Spindelkopf 16 gekoppelt ist und durch einen Spindelantrieb 22 antreibbar ist. Die Schleifscheibe 18 kann durch den Spindelantrieb 22 in Rotationen versetzt werden und mit einem Werkstück zur Materialabtragung zusammenwirken. Die Schleifscheibe 18 kann etwa mit einer Schutzhaube 20 versehen sein.

Es versteht sich, dass die Werkzeugmaschine 10 alternativ auch eine Mehrzahl von Werkzeugen, insbesondere Schleifscheiben 18, aufweisen kann. Beispielhaft können am Spindelkopf 16 zwei Schleifscheiben 18 vorgesehen sein, die für eine Bearbeitung selektiv einschwenkbar sind. Eine derartige Funktionalität kann etwa auch als sog. B-Achsen-Funktionalität beschrieben werden. Daneben ist es vorstellbar, sog. Revolver vorzusehen, die eine Mehrzahl von Schleifscheiben 18 für die Bearbeitung bereitstellen können. Grundsätzlich kann die Werkzeugmaschine 10 jedoch auch etwa als Drehmaschine, Fräsmaschine oder als Werkzeugmaschine zur kombinierten Bearbeitung ausgebildet sein.

Die Kopplung des Spindelkopfes 16 mit dem Maschinenbett 14 kann beispielhaft unter Verwendung eines Kreuztisches 24 erfolgen. Der Kreuztisch 24 kann eine erste Führungseinrichtung 26 und eine zweite Führungseinrichtung 28 bereitstellen bzw. diesen zugehörig sein. Die erste Führungseinrichtung 26 kann beispielhaft ein Verfahren des Spindelkopfes 16 entlang einer X-Achse erlauben, vgl. einen mit 30 bezeichneten Pfeil. Die zweite Führungseinrichtung 28 kann beispielhaft ein Verfahren des Spindelkopfes 16 in einer Z-Richtung erlauben, vgl. einen mit 32 bezeichneten Pfeil. Die Führungseinrichtungen 26, 28 können insbesondere als Linearführungen ausgestaltet sein. Es kann sich dabei beispielhaft etwa um Gleitführungen handeln. Bei den Gleitführungen kann es sich insbesondere um hydrodynamische Gleitführungen handeln. Ferner ist es vorstellbar, die Gleitführungen als statische Gleitführungen auszuführen, etwa als hydrostatische Gleitführungen oder als aerostatische Gleitführungen.

Insgesamt ist in Fig. 1 beispielhaft ein korrespondierendes Koordinatensystem X-Y-Z dargestellt. Es versteht sich, dass die Zuordnung des Koordinatensystems X-Y-Z zur Werkzeugmaschine 10 bzw. zu deren Komponenten grundsätzlich auch in anderer Weise erfolgen kann. Insbesondere können Achsenbezeichnungen anderen Orientierungen zugeordnet sein. Es versteht sich ferner, dass die vorangehenden und nachfolgenden Aussagen ohne weiteres auf (transformierte) abgewandelte Koordinatensysteme übertragbar sind. In gleicher Weise können etwa auch allgemeine Richtungsangaben, Drehrichtungsangaben, Angaben zu relativen Zuordnungen, die sich etwa auf bestimmte Figuren beziehen, grundsätzlich auch auf andere Figuren mit abgewandelten Blickrichtungen bzw. Ansichtsorientierungen übertragen werden.

Mit dem Maschinenbett 14 der Werkzeugmaschine 10 kann ferner eine Werkstückaufnahme 34 gekoppelt sein, die der Aufnahme und Fixierung eines zu bearbeitenden Werkstücks 50 dienen kann. Beispielhaft ist die Werkstückaufnahme 34 an einer (weiteren) Führungseinrichtung 36 aufgenommen, die dem Maschinenbett 14 zugeordnet ist. Die Führungseinrichtung 36 kann grundsätzlich etwa parallel zur Z-Achse verlaufen, vgl. Pfeil 32. Der Spindelkopf 16 mit dem daran aufgenommenen Werkzeug (Schleifscheibe 18) kann relativ zur Werkstückaufnahme 34 verfahren werden, um eine gewünschte Bearbeitung des Werkstücks 50 zu ermöglichen. Die Verfahrbewegung des Spindelkopfes 16 kann über geeignete Antriebe realisiert werden, die beispielsweise mit dem Kreuztisch 24 gekoppelt sind.

Die Werkstückaufnahme 34 weist beispielhaft eine Werkstückspindel 38 auf, die mit einer Spanneinrichtung 40 für das Werkstück 50 versehen ist. Bei der Spanneinrichtung 40 kann es sich beispielhaft um ein Spannfutter handeln. Die Spanneinrichtung 40 kann grundsätzlich ebenso auch durch eine (Zentrier-)Spitze und/oder einen Spannkonus, Spannbacken oder Ähnliches gebildet sein. Die Werkstückspindel 38 kann ferner einen Spindelantrieb aufweisen, der es etwa erlaubt, die Spanneinrichtung 40 mit dem daran aufgenommenen Werkstück 50 definiert um eine Längsachse 42 zu verdrehen, vgl. einen mit 44 bezeichneten Pfeil. Eine derartige Funktionalität kann eine sog. C-Achsen-Bearbeitung ermöglichen. Der bei der Werkstückspindel 38 fakultativ vorgesehene Antrieb kann beispielhaft derart ausgelegt und gesteuert sein, dass das Werkstück 50 hochgenau um die Achse 42 (die C-Achse) verdrehbar ist. Die C-Achsen-Bearbeitung erlaubt die Bearbeitung unrunder Werkstücke 50. Zu diesem Zweck kann die Werkzeugmaschine über geeignete Steuerungs- und Regelungsorgane verfügen, um das Werkstück 50 definiert um die Achse 42 zu verdrehen und gleichzeitig das Werkzeug (Schleifscheibe 18) auf das Werkstück 50 zuzusteuern bzw. von diesem weg zu bewegen. Auf diese Weise können etwa Nockenwellen, Kurbelwellen oder Ähnliches bearbeitet werden.

Unabhängig davon, ob die Werkstückspindel 38 der Werkstückaufnahme 34 zur C-Achsen-Bearbeitung ausgebildet ist oder nicht, kann die Längsachse 42 zumindest durch die Spanneinrichtung 40 definiert sein. Es versteht sich, dass bei einem aufgenommenen Werkstück 50 dessen Längsachse mit der durch die Werkstückaufnahme 34 definierten Längsachse 42 zusammenfallen kann.

Die Werkstückaufnahme 34 weist ferner beispielhaft einen Reitstock 46 auf, der analog zur Werkstückspindel 38 mit einer Spanneinrichtung versehen sein kann. Vorliegend weist der Reitstock 46 beispielhaft eine Spitze 48 auf, um das Werkstück 50 zentrieren zu können. Das Werkstück 50 kann grundsätzlich auch allein durch die Werkstückspindel 38 geführt und gehalten werden, ohne dass der Reitstock 46 erforderlich wäre. Insbesondere bei Werkstücken 50 mit großem Längen-Durchmesser-Verhältnis kann sich jedoch eine zweiseitige Aufnahme mittels der Werkstückspindel 38 und dem Reitstock 46 empfehlen. Übermäßig lange Werkstücke 50 können ferner zusätzlich durch sog. Lünetten, Rollen oder Auflager geführt und abgestützt werden (in Fig. 1 nicht dargestellt). Es ist ferner vorstellbar, die Werkstückspindel 38 bzw. den Reitstock 46 mit einem Linearantrieb zu versehen, um diese entlang einer durch die Führungseinrichtung 36 definierten Richtung kontrolliert verfahren zu können.

Am Werkstück 50 ist beispielhaft ein Werkstückabschnitt 52 ausgebildet, der etwa mittels der Schleifscheibe 18 zu bearbeiten ist. Zu diesem Zweck kann die Schleifscheibe 18 rotatorisch angetrieben werden. Ferner kann die Schleifscheibe 18 entlang der X-Achse (radial) auf den Werkstückabschnitt 52 zugestellt bzw. von diesem entfernt werden. Auf diese Weise kann eine Bearbeitungstiefe beeinflusst werden. Eine Vorschubbewegung der Schleifscheibe 18 relativ zur Werkstückaufnahme 34 bzw. dem Werkstückabschnitt 52 des daran aufgenommenen Werkstücks 50 kann entlang der Z-Achse erfolgen. In Fig. 1 sind die Führungseinrichtungen 26, 28 für die X-Richtung und die Z-Richtung des Spindelkopfes 16 beispielhaft durch vereinfacht dargestellte Faltenbälge, Manschetten oder ähnliche Schutzelemente verdeckt bzw. abgedichtet. Auf diese Weise können die Führungseinrichtungen bzw. ein Verfahrantrieb des Spindelkopfes 16 vor Verschmutzungen und Beschädigungen geschützt werden.

Die in Fig. 1 dargestellte Werkzeugmaschine 10 weist ferner eine Bedienerschnittstelle 54 auf, die außerhalb eines Prozessraums oder Innenraums der Werkzeugmaschine 10 angeordnet ist. Auf diese Weise kann ein Bediener die Werkzeugmaschine 10 steuern, programmieren, regeln oder etwa Diagnosen durchführen, ohne mit dem Innenraum (auch: Prozessraum) der Werkzeugmaschine 10 in Kontakt zu kommen. Bei der Bedienerschnittstelle 54 kann es sich etwa um eine Bedieneinheit handeln, die zumindest eine Eingabeeinheit 56 und eine Ausgabeeinheit 58 aufweist. Die Eingabeeinheit 56 kann eine Tastatur, Drucktaster, Stellhebel oder Ähnliches aufweisen. Die Eingabeeinheit 56 kann jedoch auch etwa berührungsempfindliche Flächen aufweisen. Bei der Ausgabeeinheit 58 handelt es sich üblicherweise um einen Bildschirm, ferner etwa um alphanumerische Anzeigen, Kontrollleuchten, Skalen oder Ähnliches. Insbesondere dann, wenn etwa ein Bildschirm berührungsempfindlich gestaltet ist, können die Eingabeeinheit 56 und die Ausgabeeinheit 58 zumindest teilweise durch identische Bauteile verwirklicht sein.

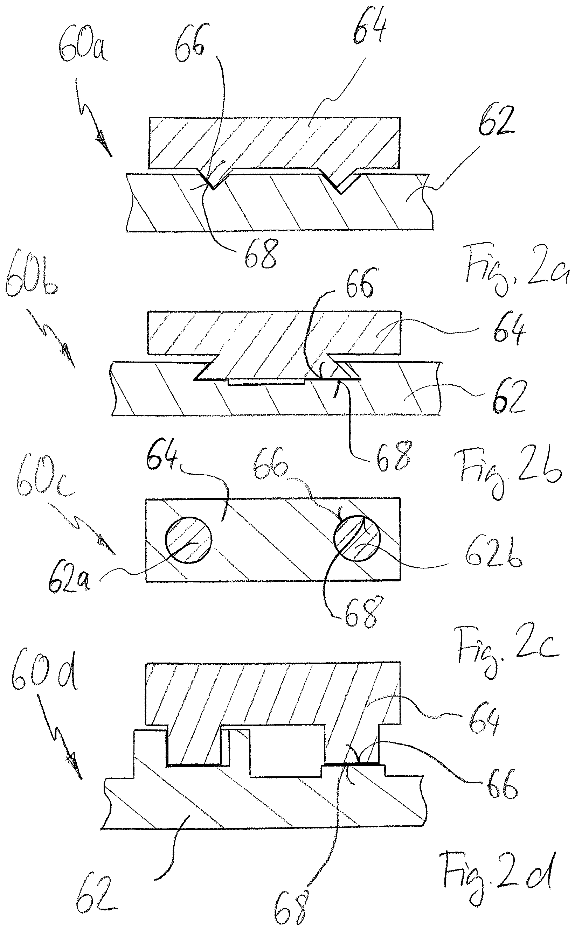

In den Fig. 2a, 2b, 2c und 2d sind Querschnitte durch verschiedene Führungseinrichtungen 60a, 60b, 60c, 60d gezeigt, die beispielhaft analog den Führungseinrichtungen 26, 28, 36 etwa beim Kreuztisch 24 oder der Werkstückaufnahme 34 der Werkzeugmaschine 10 gemäß Fig. 1 verwendbar sind. Es handelt sich bei den Führungseinrichtungen 60a, 60b, 60c, 60d allgemein um Linearführungen, die Linearbewegungen erlauben und zu diesem Zweck etwa mit geeigneten Antrieben koppelbar sind.

Die in den Fig. 2a, 2b, 2c und 2d gezeigten Führungseinrichtungen 60a, 60b, 60c, 60d sind lediglich exemplarischer Natur. Insbesondere die Zuordnung der Gestellteile 62 und der Schlittenteile 64 kann etwa auch umgekehrt erfolgen. Ferner können die Führungseinrichtungen 60 im realen Einsatz wesentlich komplexere Gestaltungen und Führungsgeometrien aufweisen. Üblicherweise sind die Führungseinrichtungen 60 mit Antriebsmitteln koppelbar, die eine motorische Relativbewegung zwischen den Gestellteilen 62 und den Schlittenteilen 64 erlauben und darüber hinaus mit einer Maschinensteuerung der Werkzeugmaschine 10 koppelbar sind. Es sind jedoch auch bei komplex gestalteten Führungseinrichtungen 60, insbesondere bei Gleitführungseinrichtungen, stets Gleitflächen vorhanden, die etwa Gestellteilen 62 und Schlittenteilen 64 zugeordnet sein können, um eine Gleitpaarung oder Reibpaarung miteinander einzugehen, wenn das Schlittenteil 64 und das Gestellteil 62 relativ zueinander verfahren werden.

Die Führungseinrichtung 60a ist als prismatische Führung ausgestaltet. Die wesentlichen Führungselemente sind als Prismen ausgeführt. Die Führungseinrichtung 60a weist beispielhaft ein Gestellteil 62 sowie ein Schlittenteil 64 auf. Das Schlittenteil 64 ist relativ zum Gestellteil 62 linear verschieblich. Die Verschiebung kann entlang einer Richtung erfolgen, die etwa senkrecht zur in Fig. 2a gezeigten Ansichtsebene verläuft. Am Schlittenteil 64 kann beispielhaft etwa ein Spindelkopf oder Ähnliches mittelbar oder unmittelbar aufgenommen sein. Das Gestellteil 62 kann mittelbar oder unmittelbar mit einem Gestell oder Maschinentisch einer Werkzeugmaschine gekoppelt sein. Am Gestellteil 62 ist zumindest eine erste Gleitfläche 66 ausgebildet. Am Schlittenteil 64 ist zumindest eine zweite Gleitfläche 68 ausgebildet. Die erste Gleitfläche 66 und die zweite Gleitfläche 68 bilden eine Reibpaarung oder Gleitpaarung. Es versteht sich, dass beim Gestellteil 62 und dem Schlittenteil 64 der Führungseinrichtung 60a weitere Gleitflächen vorgesehen sein können, die weitere Gleitpaarungen oder Reibpaarungen bilden können. Die Führungseinrichtung 60a in Fig. 2a ist als sog. offene Führung ausgestaltet. Das heißt, zumindest gemäß dem in Fig. 2a gezeigten Querschnitt ist das Schlittenteil 64 nicht formschlüssig gegen ein mögliches Lösen vom Gestellteil 62 gesichert. Es versteht sich, dass jedoch ohne weiteres Gestaltelemente vorgesehen sein können, die eine formschlüssige Lagesicherung des Schlittenteils 64 am Gestellteil 62 bereitstellen können.

Die in Fig. 2b dargestellte Führungseinrichtung 60b ist etwa als Schwalbenschwanzführung ausgebildet. Auch eine Schwalbenschwanzführung kann grundsätzlich als prismatische Führung bezeichnet werden. Die Führungseinrichtung 60b kann ferner als geschlossene Führungseinrichtung verstanden werden, da das Schlittenteil 64 formschlüssig gegen ein Lösen (auch: Abheben) vom Gestellteil 62 gesichert ist. Ähnlich der Führungseinrichtung 60a gemäß Fig. 2a weist die Führungseinrichtung 60b am Gestellteil 62 zumindest eine erste Gleitfläche 66 sowie am Schlittenteil 64 zumindest eine zweite Gleitfläche 68 auf.

Die Führungseinrichtung 60c gemäß Fig. 2c kann etwa als Rundführung oder Säulenführung bezeichnet werden. Beispielhaft sind gestellseitig ein erstes Gestellteil 62a und ein zweites Gestellteil 62b vorgesehen, die etwa als Säulen oder Stangen ausgebildet sein können. Ein Schlittenteil 64 weist passende Ausnehmungen auf und kann relativ zu den Gestellteilen 62a, 62b in einer Richtung verfahren werden, die etwa senkrecht zur in Fig. 2c gezeigten Ansichtsebene ist. An den Gestellteilen 62a, 62b können erste Gleitflächen 66 ausgebildet sein. Damit einhergehend können am Schlittenteil 64 zweite Gleitflächen 68 ausgebildet sein. Auch die Führungseinrichtung 60c kann als geschlossene Führungseinrichtung bezeichnet werden.

Die in Fig. 2d veranschaulichte Führungseinrichtung 60d kann etwa als Flachführung bezeichnet werden. Die Führungseinrichtung 60d weist Gestaltmerkmale einer offenen Führungseinrichtung auf. Die Führungseinrichtung 60d weist ein Gestellteil 62 auf, an dem zumindest eine erste Gleitfläche 66 ausgebildet ist. Ferner ist ein Schlittenteil 64 vorgesehen, das zumindest eine zweite Gleitfläche 68 aufweist und am Gestellteil 62 linear verschieblich aufgenommen ist, wobei die zumindest eine erste Gleitfläche 66 und die zumindest eine zweite Gleitfläche 68 eine Gleitpaarung oder Reibpaarung eingehen.

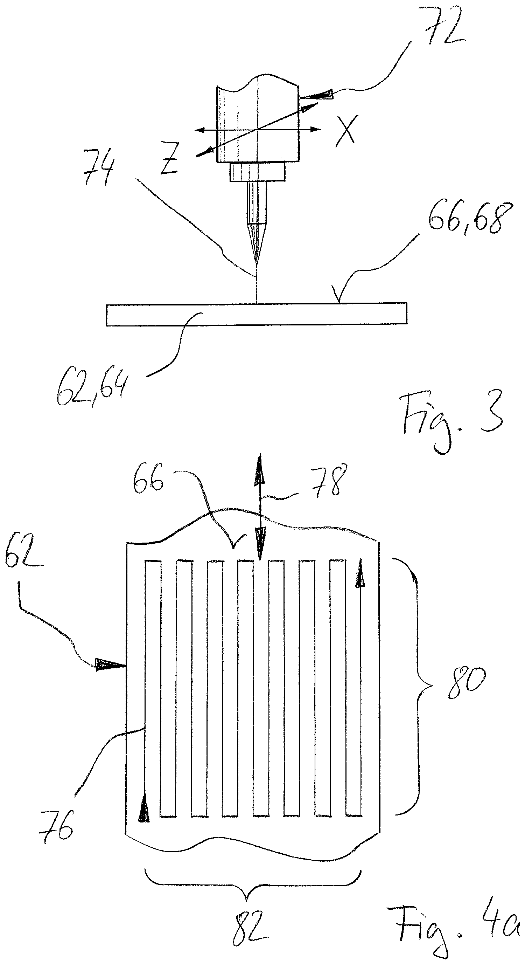

Fig. 3 zeigt eine schematisch stark vereinfachte seitliche Ansicht einer Lasereinrichtung 72, die dazu ausgebildet ist, Laserstrahlung zu erzeugen. Insbesondere ist die Lasereinrichtung 72 dazu ausgestaltet, einen gepulsten Laserstrahl 74, vorzugsweise einen kurzgepulsten Laserstrahl 74, insbesondere einen ultrakurzgepulsten Laserstrahl 74 zu erzeugen. Mittels der Lasereinrichtung 72 kann etwa auf einer ersten Gleitfläche 66 oder einer zweiten Gleitfläche 68, die einem Gestellteil 62 bzw. einem Schlittenteil 64 zugehörig sein können, eine strukturierte Oberfläche erzeugt werden, die eine Mikrostrukturierung aufweist. Vorzugsweise weist die Mikrostrukturierung zumindest eine lineare Ausdehnung auf. Insbesondere ist es bevorzugt, wenn die Mikrostrukturierung eine flächige, etwa eine zweidimensionale Ausdehnung entlang der Gleitfläche 66, 68 aufweist. Somit kann es erforderlich sein, bei der Erzeugung der Mikrostrukturierung die Lasereinrichtung 72 und das Gestellteil 62 oder das Schlittenteil 64 definiert relativ zueinander zu verfahren, vgl. mit X, Z bezeichnete Pfeile in Fig. 3.

Es versteht sich, dass alternativ zur Lasereinrichtung 72 auch andere Bearbeitungseinrichtungen zur Erzeugung der Mikrostrukturierung denkbar sind. Hierbei kann es sich beispielhaft etwa um Einrichtungen zur mechanischen Bearbeitung, zur erosiven Bearbeitung und/oder um Einrichtungen zur Ätzbearbeitung handeln. Andere Bearbeitungseinrichtungen sind denkbar. Auch eine kombinierte Bearbeitung zur Erzeugung der Mikrostrukturierung ist vorstellbar.

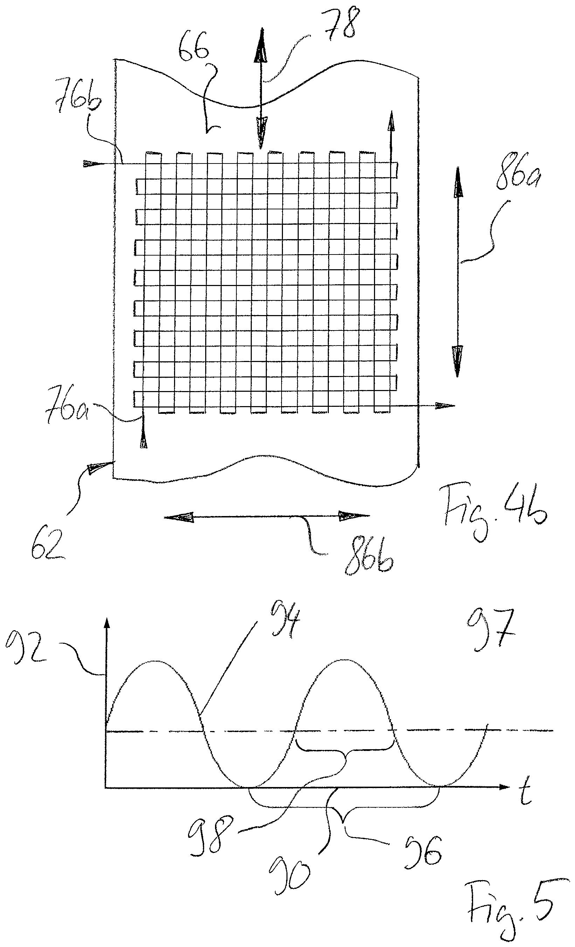

Die Fig. 4a und 4b veranschaulichen verschiedene denkbare Bearbeitungsbahnen 76, entlang denen die Relativbewegung zwischen der Lasereinrichtung 72 (oder: der Bearbeitungseinrichtung) und dem Gestellteil 62 oder dem Schlittenteil 64 erfolgen kann. Das zu bearbeitende Teil in den Fig. 4a und 4b ist beispielhaft das Gestellteil 62, dessen erste Gleitfläche 66 zumindest abschnittsweise strukturiert werden soll. Es versteht sich, dass die erste Gleitfläche 66 in Fig. 4a und 4b aus Veranschaulichungsgründen nur teilweise dargestellt ist.

Die in Fig. 4a gezeigte Bearbeitungsbahn 76 ist etwa im Wesentlichen mäanderförmig gestaltet. Während der Relativbewegung entlang der mäanderförmigen Bearbeitungsbahn kann die Lasereinrichtung 72 in geeigneter Weise gepulste Laserstrahlung 74 erzeugen, um ein Muster bestehend aus einer Mehrzahl von Strukturelementen in die erste Gleitfläche 66 einzubringen. Auf diese Weise kann die Mikrostrukturierung erzeugt werden. Die erzeugte Struktur kann etwa eine Fläche einnehmen, die durch eine Länge 80 entlang einer Führungsrichtung 78 sowie eine Breite 82 quer zur Führungsrichtung 78 gekennzeichnet ist. Entlang der Länge 80 und/oder Breite 82 kann beispielhaft eine (lineare) Musterdichte erfasst werden. Ferner kann mittels der Länge 80 und der Breite 82 eine Fläche beschrieben werden, in der die (flächige) Musterdichte bestimmbar ist.

Fig. 4b veranschaulicht beispielhaft eine Kombination zweier überlagerter Bearbeitungsbahnen 76a, 76b. Die Bearbeitungsbahnen 76a, 76b können jeweils als mäanderförmige Bahnen ausgebildet sein. Die Bearbeitungsbahn 76a weist eine erste Vorzugsorientierung oder Vorzugsrichtung 86a auf. Die Bearbeitungsbahn 76b weist eine zweite Vorzugsorientierung oder Vorzugsrichtung 86b auf. Beispielhaft können die Vorzugsrichtungen 86a, 86b zueinander senkrecht angeordnet sein. Auf diese Weise kann etwa ein gitterförmiger Musteraufbau erzeugt werden. Es versteht sich, dass ein gitterförmiges Muster eine höhere Musterdichte als ein lineares Muster aufweisen kann. Es versteht sich ferner, dass die Bearbeitungsbahnen 76a, 76b grundsätzlich auch als gemeinsame Bearbeitungsbahn betrachtet werden können. Dies könnte etwa dann der Fall sein, wenn die Relativbewegung zunächst ein Abfahren der Bearbeitungsbahn 76a und anschließend ein Abfahren der Bearbeitungsbahn 76b mit der gleichen Lasereinrichtung 72 erlaubt.

Fig. 5 veranschaulicht in stark vereinfachter Weise einen Intensitätsverlauf einer Laserbestrahlung. Eine mit 92 bezeichnete Ordinate veranschaulicht eine Intensität. Die Ordinate 92 kann etwa eine relative Intensität beschreiben. Eine mit 90 bezeichnete Abszisse veranschaulicht einen Zeitablauf t. Ein mit 94 bezeichneter Graph veranschaulicht einen (zeitlichen) Intensitätsverlauf in stark vereinfachter Weise. Insbesondere aus Veranschaulichungszwecken zeigt der Graph 94 den Verlauf einer trigonometrischen Funktion. Allgemein kann der Graph 94 eine periodische Funktion bezeichnen. Eine Periode (oder: Periodendauer) der trigonometrischen Funktion in Fig. 5 ist beispielhaft mit 96 bezeichnet. Maxima der trigonometrischen Funktion können Intensitätsmaxima beschreiben. Minima der trigonometrischen Funktion können Intensitätsminima, insbesondere auch Null-Intensitäten beschreiben. Eine Pulsbreite 98 kann etwa einen bestimmten Anteil der Periode 96 umfassen. Beispielhaft kann bei der in Fig. 5 gezeigten trigonometrischen Funktion ein Schwellwert 97 vorgesehen sein. Es ist vorstellbar, beim Unterschreiten des Schwellwerts 97 automatisch eine Null-Intensität herbeizuführen. So kann beispielhaft durch Variation des Schwellwerts 97 sowohl eine Pulsbreite als auch eine mit einem Impuls verknüpfte Energiemenge beeinflusst werden. Die Intensität, Frequenz und Pulsbreite der Laserstrahlung kann durch im Stand der Technik bekannte Methoden variiert, moduliert und geeignet gesteuert werden.

Es versteht sich jedoch, dass die Pulsbreite der Laserstrahlung 74 auch auf andere Art und Weise definiert und variiert werden kann. So kann etwa eine zugrunde liegende Funktion als Rechteckfunktion, Dreieckfunktion, Sägezahnfunktion oder auch als geeignete Transformationsfunktion (etwa als Fourier-Transformation) ausgebildet sein. Ferner ist vorstellbar, bekannte Methoden zur Pulsweitenmodulation auf eine Funktion mit gegebener Frequenz bzw. gegebener Periodendauer anzuwenden. Wie vorstehend bereits erwähnt, bringt die Verwendung von ultrakurzgepulstem Laserlicht bei der Erzeugung der gewünschten Mikrostrukturen verschiedene Vorteile. Insbesondere können filigranste Gestaltelemente definiert und wiederholgenau erzeugt werden, um die tribologischen Eigenschaften der Führungseinrichtung zu optimieren.

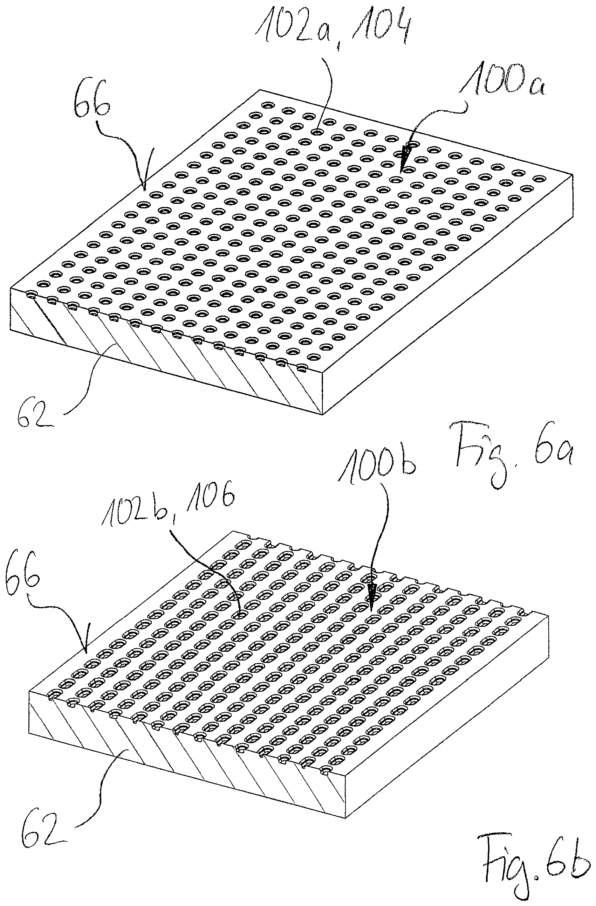

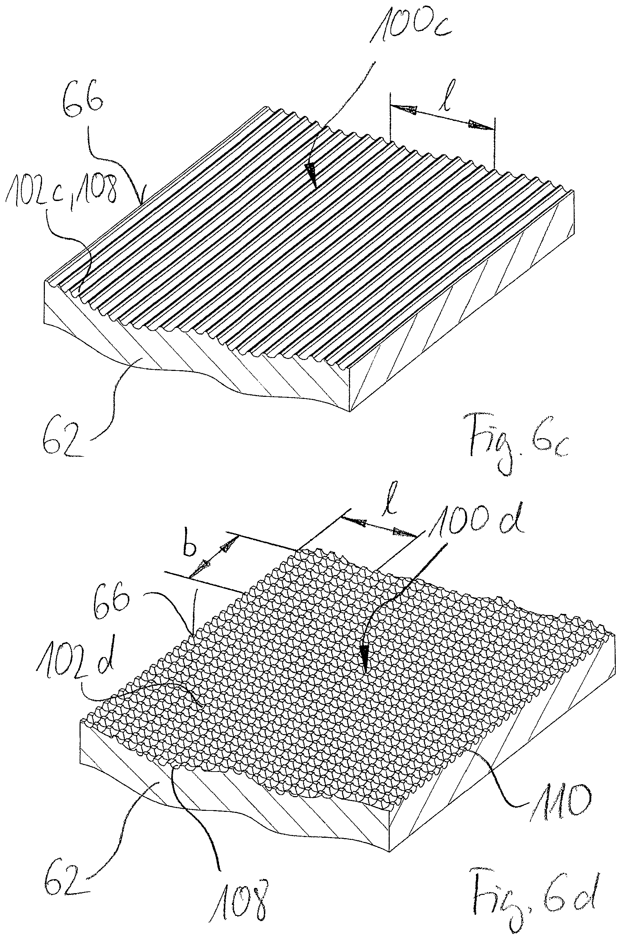

Mit Hilfe der laserbasierten Mikrostrukturierung lassen sich feinste Mikrostrukturen auf Bauelementen erzeugen. Anhand der Fig. 6a, 6b, 6c und 6d werden verschiedene Mikrostrukturierungen 100a, 100b, 100c, 100d veranschaulicht, die insbesondere bei Gleitflächen von Führungseinrichtungen zur Optimierung des Reibverhaltens eingebracht werden können. Es versteht sich, dass die Strukturelemente in den Fig. 6a bis 6d aus Veranschaulichungsgründen idealisiert dargestellt sind.

In den Fig. 6a, 6b, 6c und 6d ist wiederum als Basiskörper beispielhaft das Gestellteil 62 mit der zumindest einen ersten Gleitfläche 66 teilweise dargestellt. Fig. 6a zeigt eine Mikrostrukturierung 100a, die eine Vielzahl von Strukturelementen 102a aufweist, die etwa als Bohrungen oder Vertiefungen 104 in der ersten Gleitfläche 66 des Gestellteils 62 ausgebildet sind. Zur Erzeugung der insbesondere zylinderförmigen oder konischen Vertiefungen 106 kann die Lasereinrichtung 72 entlang der Bearbeitungsbahn 76 (vgl. Fig. 4a) relativ zum Gestellteil 62 verfahren und in geeigneter Weise zur Erzeugung gepulster Laserstrahlung angesteuert werden. Es ist grundsätzlich vorstellbar, jede der Vertiefungen 104 mittels eines einzigen Laserimpulses auszuformen. Es ist jedoch auch vorstellbar, jede der Vertiefungen 104 mit einer Mehrzahl von Laserimpulsen zu erzeugen.

Die in Fig. 6b gezeigte Mikrostrukturierung 100b weist eine Mehrzahl von Strukturelementen 102b auf, die insbesondere als nutförmige Vertiefungen oder Nuten 106 ausgebildet sind. Die Nuten 104 können etwa in Reihen angeordnet sein, die parallel zueinander angeordnet sind. Die Reihen können ferner miteinander ausgerichtet sein oder aber versetzt zueinander angeordnet sein. Die Mikrostrukturierung 100b kann etwa dann erzeugt werden, wenn die Lasereinrichtung 72 relativ zum Gestellteil 62 entlang der Bearbeitungsbahn 76 (vgl. Fig. 4a) verfahren wird und in geeigneter Weise im Ultrakurzpulsbetrieb angesteuert wird. Es versteht sich, dass zur Erzeugung jeder der Nuten 106 eine Vielzahl oder Mehrzahl von Impulsen erforderlich sein kann.

Fig. 6c zeigt mit der Mikrostrukturierung 100c eine Mehrzahl oder Vielzahl von Strukturelementen 102c, die etwa als Rinnen 108 an der ersten Gleitfläche 66 des Gestellteils 62 ausgebildet sein können. Die Mikrostrukturierung 100c kann insgesamt eine Folge von Tälern und Bergen aufweisen. Die Rinnen oder Rillen 108 können eine Vorzugsrichtung aufweisen und im Wesentlichen zueinander parallel verlaufen. Ein mit I bezeichneter Pfeil veranschaulicht ein Referenzmaß, entlang dem eine (lineare) Musterdichte bestimmbar ist. Auch die Mikrostrukturierung 100c kann beim Abfahren der Bearbeitungsbahn 76 (Fig. 4a) durch die Lasereinrichtung 72 bei der Relativbewegung gegenüber dem Gestellteil 62 sowie einer geeigneten Ansteuerung zur Erzeugung von gepulster Laserstrahlung erzeugt werden.

In Fig. 6d wird eine weitere Mikrostrukturierung 100d gezeigt, die als Weiterbildung der in Fig. 6c gezeigten Mikrostrukturierung 100c aufgefasst werden kann. Zusätzlich zur rinnenförmigen Gestaltung mit Rinnen oder Rillen 108, die in einer Vorzugsrichtung verlaufen, ist in Fig. 6d den Strukturelementen 102d ferner eine rillenförmige Gestaltung zugeordnet, die Rinnen oder Rillen 110 umfasst, die in einer Vorzugsrichtung verlaufen, die beispielhaft etwa senkrecht zur Vorzugsrichtung der Rinnen oder Rillen 108 angeordnet ist. Auf diese Weise kann sich mit den Rillen 108, 110 insgesamt eine gekreuzte gitterförmige Struktur ergeben. Eine (flächige) Musterdichte kann beispielhaft auf Basis einer Fläche bestimmt werden, die durch eine Länge I sowie eine Breite b definiert ist. Die in Fig. 6d gezeigte Mikrostrukturierung 102d kann etwa beim Abfahren der in Fig. 4b gezeigten Bearbeitungsbahnen 76a, 76b durch die Lasereinrichtung 72 während der Relativbewegung gegenüber dem Gestellteil 62 sowie geeignete Ansteuerung der Lasereinrichtung 72 im Pulsbetrieb erzeugt werden.

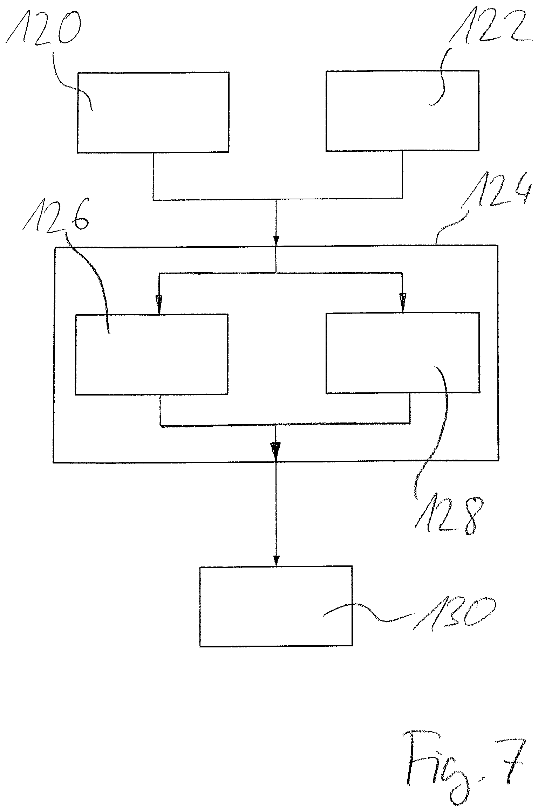

Fig. 7 veranschaulicht in stark vereinfachter Weise anhand eines schematischen Flussdiagramms ein beispielhaftes Verfahren zur Herstellung einer Führungseinrichtung für eine Werkzeugmaschine, insbesondere für eine Schleifmaschine. Die Führungseinrichtung kann etwa bei der in Fig. 1 veranschaulichten Werkzeugmaschine 10 zur Verwendung kommen.

Bei einem Schritt 120 wird eine sich im Wesentlichen linear erstreckende erste Gleitfläche und eine sich im Wesentlichen linear erstreckende zweite Gleitfläche bereitgestellt, die mit der zumindest einen ersten Gleitfläche koppelbar ist, um eine Relativbewegung, insbesondere eine lineare Relativbewegung, zwischen diesen zu erlauben. In einem weiteren Schritt 122, der grundsätzlich parallel zum Schritt 120 oder aber von diesem zeitlich versetzt erfolgen kann, wird eine Lasereinrichtung bereitgestellt, die dazu ausgebildet ist, Laserstrahlung, insbesondere kurzgepulste, vorzugsweise ultrakurzgepulste Laserstrahlung zu erzeugen.

Es schließt sich ein Schritt 124 an, der die Erzeugung einer zumindest abschnittsweisen strukturierten Oberfläche auf zumindest der ersten Gleitfläche oder der zweiten Gleitfläche mit der Lasereinrichtung umfasst, wobei eine Mikrostrukturierung zur Reibungsoptimierung erzeugt wird. Der Schritt 124 kann die grundsätzlich miteinander verknüpften Schritte 126 und 128 umfassen. Der Schritt 126 kann die Bestrahlung einer zu strukturierenden Oberfläche mit kurzgepulster, vorzugsweise mit ultrakurzgepulster Laserstrahlung, umfassen, um vertiefte Strukturelemente in der zu bearbeitenden Gleitfläche zu erzeugen. Der Schritt 128 umfasst die Erzeugung einer Relativbewegung zwischen der Lasereinrichtung und der zu strukturierenden Oberfläche. Auf diese Weise kann eine lineare und/oder flächige Gestaltung mit einer Mehrzahl oder Vielzahl von Strukturelementen erfolgen, so dass schlussendlich eine flächige Mikrostrukturierung der zu bearbeitenden Gleitfläche durchgeführt werden kann.

Das Verfahren kann bei einem Schritt 130 beendet werden, wenn die gewünschte Mikrostrukturierung erzeugt ist.

## Patentansprüche

1. Werkzeugmaschine, insbesondere Schleifmaschine, mit zumindest einer als Gleitführung gestalteten Führungseinrichtung (26, 28, 36, 60), wobei die Führungseinrichtung (26, 28, 36, 60) zumindest eine sich linear in einer Ebene erstreckende erste Gleitfläche (66) und zumindest eine sich linear in einer Ebene erstreckende zweite Gleitfläche (68) aufweist, die miteinander gekoppelt sind, um eine lineare Relativbewegung zwischen der ersten Gleitfläche (66) und der zweiten Gleitfläche (68) zu erlauben,
**dadurch gekennzeichnet,**
**dass** zumindest die erste Gleitfläche (66) oder die zweite Gleitfläche (68) zumindest abschnittweise mit einer aserstrukturierten Oberfläche versehen ist, die eine Mikrostrukturierung (100) zur Reibungsoptimierung aufweist,
**dass** die Mikrostrukturierung (100) als Muster mit einer Vielzahl rinnenförmiger Vertiefungen (110) ausgebildet ist, wobei zumindest einige der rinnenförmigen Vertiefungen in einer ersten Vorzugsrichtung (86a) und zumindest einige der rinnenförmigen Vertiefungen in einer zweiten Vorzugsrichtung (86b) entlang der Oberfläche ausgerichtet sind, und wobei die erste Vorzugsrichtung (86a) und die zweite Vorzugsrichtung (86b) einen Winkel einschließen und insbesondere senkrecht zueinander sind, und
**dass** die zumindest eine zweite Gleitfläche (68) einem Schlitten zugeordnet ist, der relativ zur zumindest einen ersten Gleitfläche (66) verfahrbar ist, und wobei die zumindest eine zweite Gleitfläche (68) zumindest abschnittweise mit der laserstrukturierten Oberfläche versehen ist, die die Mikrostrukturierung (100) aufweist.

2. Werkzeugmaschine (10) nach Anspruch 1, wobei die Mikrostrukturierung (100) der laserstrukturierten Oberfläche eine Strukturdichte von mindestens 10 Strukturelementen (102) pro Millimeter, vorzugsweise von mindestens 50 Strukturelementen (102) pro Millimeter, weiter bevorzugt von mindestens 100 Strukturelementen (102) pro Millimeter aufweist.

3. Werkzeugmaschine (10) nach Anspruch 1 oder 2, wobei die Mikrostrukturierung (100) der laserstrukturierten Oberfläche eine Strukturdichte von mindestens 100 Strukturelementen (102) pro Quadratmillimeter, vorzugsweise von mindestens 2.500 Strukturelementen (102) pro Quadratmillimeter, weiter bevorzugt von mindestens 10.000 Strukturelementen (102) pro Quadratmillimeter aufweist.

4. Werkzeugmaschine (10) nach einem der vorhergehenden Ansprüche, wobei die Mikrostrukturierung (100) eine Vielzahl vertiefter Strukturelemente (102) aufweist, deren Bearbeitungsfläche einen Anteil von maximal etwa 50 %, vorzugsweise von maximal etwa 30 %, weiter bevorzugt von maximal etwa 15 % an der Grundfläche der laserstrukturierten Oberfläche umfasst.

5. Werkzeugmaschine (10) nach einem der vorhergehenden Ansprüche, wobei die Mikrostrukturierung (100) als Muster mit einer Vielzahl voneinander beabstandeter Ausnehmungen ausgebildet ist, die insbesondere als im Wesentlichen zylindrische oder kegelige Vertiefungen (106) ausgebildet sind.

6. Werkzeugmaschine (10) nach einem der vorhergehenden Ansprüche, wobei die Mikrostrukturierung (100) als Muster mit einer Vielzahl voneinander beabstandeter Ausnehmungen ausgebildet ist, die als Nuten (104) ausgebildet sind, insbesondere als sich in Richtung auf einen Nutgrund verjüngende Nuten (104).

7. Werkzeugmaschine (10) nach einem der vorhergehenden Ansprüche, wobei die Mikrostrukturierung (100) als Muster mit einer Vielzahl voneinander beabstandeter rinnenförmiger Vertiefungen (108) ausgebildet ist, die insbesondere einen im Wesentlichen geradlinigen Verlauf aufweisen.

8. Werkzeugmaschine (10) nach einem der vorhergehenden Ansprüche, wobei die zumindest eine erste Gleitfläche (66) gestellseitig an der Werkzeugmaschine (10) aufgenommen ist und zumindest abschnittweise mit der laserstrukturierten Oberfläche versehen ist, die die Mikrostrukturierung (100) aufweist.

9. Werkzeugmaschine (10) nach einem der vorhergehenden Ansprüche, wobei die zumindest eine erste Gleitfläche (66) und die zumindest eine zweite Gleitfläche (68) mit der laserstrukturierten Oberfläche versehen sind, die die Mikrostrukturierung (100) aufweist.

10. Verfahren zur Herstellung einer Führungseinrichtung (26, 28, 36, 60) für eine Werkzeugmaschine (10), insbesondere eine Schleifmaschine, umfassend die folgenden Schritte:
- Bereitstellen zumindest einer sich im Wesentlichen linear in einer Ebene erstreckenden ersten Gleitfläche (66) und zumindest einer sich im Wesentlichen linear in einer Ebene erstreckenden zweiten Gleitfläche (68), die mit der zumindest einen ersten Gleitfläche (66) gekoppelt wird, um eine lineare Relativbewegung zwischen der ersten Gleitfläche (66) und der zweiten Gleitfläche (68) zu erlauben; und
- Erzeugen einer zumindest abschnittsweise strukturierten Oberfläche auf zumindest der ersten Gleitfläche (66) oder der zweiten Gleitfläche (68) mit einer Lasereinrichtung (72), umfassend Erzeugung einer Mikrostrukturierung (100) zur Reibungsoptimierung,
wobei die Mikrostrukturierung (100) als Muster mit einer Vielzahl rinnenförmiger Vertiefungen (110) ausgebildet wird, wobei zumindest einige der rinnenförmigen Vertiefungen in einer ersten Vorzugsrichtung (86a) und zumindest einige der rinnenförmigen Vertiefungen in einer zweiten Vorzugsrichtung (86b) entlang der Oberfläche ausgerichtet werden, und wobei die erste Vorzugsrichtung (86a) und die zweite Vorzugsrichtung (86b) einen Winkel einschließen und insbesondere senkrecht zueinander sind, und wobei die zumindest eine zweite Gleitfläche (68) einem Schlitten zugeordnet ist, der relativ zur zumindest einen ersten Gleitfläche (66) verfahrbar ist, und wobei die zumindest eine zweite Gleitfläche (68) zumindest abschnittweise mit der laser-strukturierten Oberfläche versehen ist, die die Mikrostrukturierung (100) aufweist.

11. Verfahren nach Anspruch 10, wobei der Schritt des Erzeugens der zumindest abschnittsweise strukturierten Oberfläche folgendes aufweist:
- Bestrahlung der zu strukturierenden Oberfläche mit kurzgepulster, vorzugsweise mit ultrakurzgepulster Laserstrahlung (74) zur Erzeugung einer Vielzahl von vertieften Strukturelementen (102); und
- Erzeugung einer Relativbewegung zwischen der Lasereinrichtung (72) zur Erzeugung von Laserstrahlung (74) und der zu strukturierenden Oberfläche zur Erzeugung einer flächigen Mikrostrukturierung (100).

## Claims

1. A machine tool, in particular a grinding machine, having at least one guiding device (26, 28, 36, 60) that is arranged as a sliding guide, wherein the guiding device (26, 28, 36, 60) comprises at least one first sliding surface (66) extending linearly in a plane and at least one second sliding surface (68) extending linearly in a plane, which are coupled to one another so as to permit a linear relative movement between the first sliding surface (66) and the second sliding surface (68),
**characterized in that**
at least the first sliding surface (66) or the second sliding surface (68) is provided, at least in sections, with a laser textured surface that comprises a micro texturing (100) for friction optimization,
the micro texturing (100) is formed as a pattern having a plurality of groove-shaped indentations (110), wherein at least some of the groove-shaped indentations are oriented in a first preferred direction (86a) and at least some of the groove-shaped indentations are oriented in a second preferred direction (86b) along the surface, and wherein the first preferred direction (86a) and the second preferred direction (86b) include an angle and are in particular perpendicular to each other, and
the at least one second sliding surface (68) is associated to a carriage that is arranged to be moved relative to the at least one first sliding surface (66), and wherein the at least one second sliding surface (68) is provided, at least in sections, with the laser textured surface that comprises the micro texturing (100).

2. The machine tool (10) according to claim 1, wherein the micro texturing (100) of the laser textured surface comprises a texture density of at least 10 texture elements (102) per millimeter, preferably of at least 50 texture elements (102) per millimeter, more preferably of at least 100 texture elements (102) per millimeter.

3. The machine tool (10) according to claim 1 or 2, wherein the micro texturing (100) of the laser textured surface comprises a texture density of at least 100 texture elements (102) per square millimeter, preferably of at least 2,500 texture elements (102) per square millimeter, more preferably of at least 10,000 texture elements (102) per square millimeter.

4. The machine tool (10) according to any one of the preceding claims, wherein the micro texturing (100) comprises a plurality of recessed texture elements (102) whose machining area comprises a proportion of at most about 50%, preferably at most about 30%, more preferably at most about 15%, of the base area of the laser textured surface.

5. The machine tool (10) according to any one of the preceding claims, wherein the micro texturing (100) is formed as a pattern having a plurality of spaced-apart recesses, in particular formed as substantially cylindrical or tapered indentations (106).

6. The machine tool (10) according to any one of the preceding claims, wherein the micro texturing (100) is formed as a pattern having a plurality of recesses spaced apart from one another, which are formed as grooves (104), in particular as grooves (104) tapering towards a groove base.

7. The machine tool (10) according to any one of the preceding claims, wherein the micro texturing (100) is formed as a pattern having a plurality of spaced-apart groove-shaped indentations (108), which in particular comprises a substantially rectilinear course.

8. The machine tool (10) according to any one of the preceding claims, wherein the at least one first sliding surface (66) is support on the frame side of the machine tool (10) and is provided, at least in sections, with the laser textured surface comprising the micro texturing (100).

9. The machine tool (10) according to any one of the preceding claims, wherein the at least one first sliding surface (66) and the at least one second sliding surface (68) are provided with the laser textured surface that comprises the micro texturing (100).

10. A method for manufacturing a guiding device (26, 28, 36, 60) for a machine tool (10), in particular a grinding machine, comprising the following steps:
- providing at least one first sliding surface (66) extending substantially linearly in a plane, and at least one second sliding surface (68) extending substantially linearly in a plane, which is coupled to the at least one first sliding surface (66) to permit a relative linear movement between the first sliding surface (66) and the second sliding surface (68); and
- forming an at least sectionally textured surface on at least the first sliding surface (66) or the second sliding surface (68) with a laser device (72), comprising forming a micro texturing (100) for friction optimization, wherein the micro texturing (100) is formed as a pattern having a plurality of groove-shaped indentations (110), wherein at least some of the groove-shaped indentations are oriented in a first preferred direction (86a) and at least some of the groove-shaped indentations are oriented in a second preferred direction (86b) along the surface, and wherein the first preferred direction (86a) and the second preferred direction (86b) include an angle and are in particular perpendicular to each other, and
wherein the at least one second sliding surface (68) is associated to a carriage that is movable relative to the at least one first sliding surface (66), and wherein the at least one second sliding surface (68) is provided, at least in sections, with the laser textured surface that comprises the micro texturing (100).

11. The method according to claim 10, wherein the step of forming the at least sectionally textured surface comprises:
- irradiating the surface to be structured with short-pulsed, preferably ultrashort-pulsed laser radiation (74) to form a plurality of recessed texture elements (102); and
- generating relative motion between the laser device (72) for generating laser radiation (74) and the surface to be structured to form a two-dimensional micro texturing (100).

## Revendications

1. Machine-outil, en particulier meuleuse, comportant au moins un dispositif de guidage (26, 28, 36, 60) réalisé en tant que guidage à glissement, le dispositif de guidage (26, 28, 36, 60) comprenant au moins une première surface de glissement (66) s'étendant linéairement dans un plan et au moins une deuxième surface de glissement (68) s'étendant linéairement dans un plan, lesquelles sont accouplées l'une à l'autre afin de permettre un mouvement relatif linéaire entre la première surface de glissement (66) et la deuxième surface de glissement (68),
**caractérisée en ce**
**qu'**au moins la première surface de glissement (66) ou la deuxième surface de glissement (68) est dotée, au moins dans certaines zones, d'une surface structurée par laser qui présente une micro-structuration (100) pour l'optimisation de la friction,
en ce que la micro-structuration (100) est réalisée en tant que motif présentant une pluralité d'évidements (110) en forme de canaux, au moins certains des évidements en forme de canaux étant orientés dans une première direction préférentielle (86a) et au moins certains des évidements en forme de canaux étant orientés dans une deuxième direction préférentielle (86b) le long de la surface, et la première direction préférentielle (86a) et la deuxième direction préférentielle (86b) formant un angle et étant en particulier perpendiculaires l'une à l'autre, et
en ce que l'au moins une deuxième surface de glissement (68) est associée à un chariot qui est déplaçable par rapport à l'au moins une première surface de glissement (66), et l'au moins une deuxième surface de glissement (68) étant dotée, au moins dans certaines zones, de la surface structurée par laser qui présente la micro-structuration (100).

2. Machine-outil (10) selon la revendication 1, la micro-structuration (100) de la surface structurée par laser présentant une densité structurale d'au moins 10 éléments structuraux (102) par millimètre, de préférence d'au moins 50 éléments structuraux (102) par millimètre, de manière particulièrement préférée d'au moins 100 éléments structuraux (102) par millimètre.

3. Machine-outil (10) selon la revendication 1 ou 2, la micro-structuration (100) de la surface structurée par laser présentant une densité structurale d'au moins 100 éléments structuraux (102) par millimètre carré, de préférence d'au moins 2.500 éléments structuraux (102) par millimètre carré, de manière particulièrement préférée d'au moins 10.000 éléments structuraux (102) par millimètre carré.

4. Machine-outil (10) selon l'une des revendications précédentes, la micro-structuration (100) comprenant une pluralité d'éléments structuraux renfoncés (102) dont la surface d'usinage comporte une part d'au maximum approximativement 50 %, de préférence d'au maximum approximativement 30 %, de manière particulièrement préférée d'au maximum approximativement 15 % de la surface de base de la surface structurée par laser.

5. Machine-outil (10) selon l'une des revendications précédentes, la micro-structuration (100) étant réalisée en tant que motif présentant une pluralité de cavités espacées les unes des autres qui sont réalisées en particulier en tant qu'évidements (106) sensiblement cylindriques ou coniques.

6. Machine-outil (10) selon l'une des revendications précédentes, la micro-structuration (100) étant réalisée en tant que motif présentant une pluralité de cavités espacées les unes des autres qui sont réalisées en tant que rainures (104), en particulier en tant que rainures (104) se rétrécissant en direction d'un fond de rainure.

7. Machine-outil (10) selon l'une des revendications précédentes, la micro-structuration (100) étant réalisée en tant que motif présentant une pluralité d'évidements (108) en forme de canaux espacés les uns des autres qui présentent en particulier une allure sensiblement rectiligne.

8. Machine-outil (10) selon l'une des revendications précédentes, l'au moins une première surface de glissement (66) étant reçue sur la machine-outil (10) côté bâti et étant dotée, au moins dans certaines zones, de la surface structurée par laser qui présente la micro-structuration (100).

9. Machine-outil (10) selon l'une des revendications précédentes, l'au moins une première surface de glissement (66) et l'au moins une deuxième surface de glissement (68) étant dotées de la surface structurée par laser qui présente la micro-structuration (100).

10. Procédé de fabrication d'un dispositif de guidage (26, 28, 36, 60) pour une machine-outil (10), en particulier une meuleuse, comportant les étapes suivantes :
- fourniture d'au moins une première surface de glissement (66) s'étendant sensiblement linéairement dans un plan et d'au moins une deuxième surface de glissement (68) s'étendant sensiblement linéairement dans un plan, laquelle est accouplée à l'au moins une première surface de glissement (66) afin de permettre un mouvement relatif linéaire entre la première surface de glissement (66) et la deuxième surface de glissement (68) ; et
- production d'une surface structurée au moins dans certaines zones sur au moins la première surface de glissement (66) ou la deuxième surface de glissement (68) à l'aide d'un dispositif laser (72), comportant la production d'une micro-structuration (100) pour l'optimisation de la friction,
la micro-structuration (100) étant réalisée en tant que motif présentant une pluralité d'évidements (110) en forme de canaux, au moins certains des évidements en forme de canaux étant orientés dans une première direction préférentielle (86a) et au moins certains des évidements en forme de canaux étant orientés dans une deuxième direction préférentielle (86b) le long de la surface, et la première direction préférentielle (86a) et la deuxième direction préférentielle (86b) formant un angle et étant en particulier perpendiculaires l'une à l'autre, et
l'au moins une deuxième surface de glissement (68) étant associée à un chariot qui est déplaçable par rapport à l'au moins une première surface de glissement (66), et l'au moins une deuxième surface de glissement (68) étant dotée, au moins dans certaines zones, de la surface structurée par laser qui présente la micro-structuration (100).

11. Procédé selon la revendication 10, l'étape de production de la surface structurée au moins dans certaines zones comprenant ce qui suit :
- exposition de la surface à structurer à un rayonnement laser (74) à impulsions courtes, de préférence à impulsions ultracourtes, pour la production d'une pluralité d'éléments structuraux renfoncés (102) ; et
- production d'un mouvement relatif entre le dispositif laser (72) servant à la production d'un rayonnement laser (74) et la surface à structurer pour la production d'une micro-structuration plane (100).
